Europäisches Patentamt

European Patent Office

Office européen des brevets

(19)

(11)  **EP 1 411 350 B1**

(12)  **EUROPÄISCHE PATENTSCHRIFT**

(45) Veröffentlichungstag und Bekanntmachung des
Hinweises auf die Patenterteilung:
**03.05.2006  Patentblatt 2006/18**

(51) Int Cl.:
***G01N 27/22*** *(2006.01)*

(21) Anmeldenummer: **02023364.9**

(22) Anmeldetag: **18.10.2002**

(54) **Verfahren zur Erfassung der Luftfeuchtigkeit mit kapazitivem Feuchte-Messelement**

method for measuring air humidity with capacitive humidity sensor

méthode de mesure de l'humidité atmosphérique avec un capteur capacitif d'humidité

(84) Benannte Vertragsstaaten:
**AT CH DE FR GB IT LI**

(43) Veröffentlichungstag der Anmeldung:
**21.04.2004  Patentblatt 2004/17**

(73) Patentinhaber: **Siemens Schweiz AG**
**8047 Zürich (CH)**

(72) Erfinder: **Lüthi, Yves**
**6340 Baar (CH)**

(74) Vertreter: **Weise, Wolfgang**
**Siemens Schweiz AG**
**Intellectual Property Department Zug**
**Gubelstrasse 22**
**6300 Zug (CH)**

(56) Entgegenhaltungen:
**EP-A- 0 377 782**

• ZHI CHEN ET AL: "HUMIDITY SENSORS WITH
REACTIVELY EVAPORATED AL2O3 FILMS AS
POROUS DIELECTRICS" SENSORS AND
ACTUATORS B, ELSEVIER SEQUOIA S.A.,
LAUSANNE, CH, Bd. B2, Nr. 3, 1. August 1990
(1990-08-01), Seiten 167-171, XP000142561 ISSN:
0925-4005
• LI G Q ET AL: "A humidity-sensing model for
metal-insulator-semiconductor capacitors with
porous ceramic film" JOURNAL OF APPLIED
PHYSICS, 15 JUNE 2000, AIP, USA, Bd. 87, Nr. 12,
Seiten 8716-8720, XP002237564 ISSN: 0021-8979

• DENTON D D ET AL: "The long term reliability of
a switched-capacitor relative humidity sensor
system" CIRCUITS AND SYSTEMS, 1990.,
PROCEEDINGS OF THE 33RD MIDWEST
SYMPOSIUM ON CALGARY, ALTA., CANADA
12-14 AUG. 1990, NEW YORK, NY, USA,IEEE, US,
12. August 1990 (1990-08-12), Seiten 854-857,
XP010047973 ISBN: 0-7803-0081-5
• DOKMECI M ET AL: "A HIGH-SENSITIVITY
POLYIMIDE CAPACITIVE RELATIVE HUMIDITY
SENSOR FOR MONITORING ANODICALLY
BONDED HERMETIC MICROPACKAGES"
JOURNAL OF MICROELECTROMECHANICAL
SYSTEMS, IEEE INC. NEW YORK, US, Bd. 10, Nr.
2, Juni 2001 (2001-06), Seiten 197-204,
XP001123590 ISSN: 1057-7157
• VISSCHER G J W ET AL: "LONG-TERM TESTS OF
CAPACITIVE HUMIDITY SENSORS"
MEASUREMENT SCIENCE AND TECHNOLOGY,
IOP PUBLISHING, BRISTOL, GB, Bd. 5, Nr. 10, 1.
Oktober 1994 (1994-10-01), Seiten 1294-1302,
XP000471374 ISSN: 0957-0233
• ANCHISINI R ET AL: "Polyphosphazene
membrane as a very sensitive resistive and
capacitive humidity sensor" SENSORS AND
ACTUATORS B, ELSEVIER SEQUOIA S.A.,
LAUSANNE, CH, Bd. 35, Nr. 1, 1. September 1996
(1996-09-01), Seiten 99-102, XP004049738 ISSN:
0925-4005
• PATENT ABSTRACTS OF JAPAN Bd. 015, Nr. 019
(P-1153) 16 Januar 1991 & JP 02 262 044 A
(TOSHIBA CORP) 24 Oktober 1990

EP 1 411 350 B1

**Beschreibung**

Die Erfindung bezieht sich auf ein Verfahren zur Erfassung der Feuchte mit einem kapazitiven feuchteempfindlichen Element gemäss dem Oberbegriff des Anspruchs 1.

Solche Vorrichtungen und Verfahren werden vorteilhaft in der Heizungs-, Lüftungs- und Klimatechnik (HLK) für Gebäude zur Erfassung der Luftfeuchtigkeit in einem Raum oder in einer Einrichtung zum Zu- oder Abführen von Luft verwendet.

Kapazitive Feuchte-Messelemente liefern einen Kapazitätswert in Abhängigkeit von der Luftfeuchte in der Umgebung des Messelements. Dieser Kapazitätswert ist mit Hilfe einer Auswerteelektronik messbar. Mit dem gemessenen Kapazitätswert wird unter Verwendung von weiteren Grössen wie Temperatur und Vergleichsgrössen ein aktueller Feuchtewert ermittelt.

Kapazitive Feuchte-Messelemente sind in verschiedenen Ausführungen auf dem Markt, als Beispiele seien hier "HS1100" der Firma Humirel, "MiniCap2" der Firma Panametrics, "H5000" der Firma Gefran, "Hygromer C-94" der Firma Rotronic und "HC1000" der Firma E+E Elektronik genannt. Hersteller von Feuchte-Messelementen schlagen in der Regel auch Schaltungen vor, mit deren Hilfe die Luftfeuchtigkeit gemessen werden kann. Vielfach wird für den Einsatz der genannten Feuchte-Messelemente eine Oszillatorschaltung mit einer allgemein bekannten astabilen Kippstufe "555" vorgeschlagen.

Auch aus US 5,844,138 ist eine Einrichtung dieser Art bekannt, bei der ein kapazitiver Feuchtesensor Teil eines Oszillators ist. Die Frequenz des Oszillators ist vom Zustand des Feuchtesensors und damit von der Feuchte abhängig.

In EP-A-0 377 782 wird ein Verfahren zur Bestimmung des Alkoholgehalts oder des Heizwerts von Kraftstoffen unter Verwendung einer kapazitiven Messzelle vorgeschlagen. In einer Kippschaltung bildet die Kraftstoffmenge der Messzelle das Dielektrikum einer frequenzbestimmenden Kapazität. Die Kippfrequenz der Kippschaltung wird zur Bestimmung der Kapazität ausgewertet.

In einer Veröffentlichung von Zhi Chen et al (Zhi Chen et al: "Humidity Sensors with Reactively Evaporated Al2O2 Films as Porous Dielectrics", Sensors and Actuators B, Elsevier Sequoia S. A., Lausanne, CH, Bd. B2, Nr. 3, 1. August 1990, Seiten 167-171, XP000142561, ISSN: 0925-4005) wird eine Einrichtung zur Kalibrierung gewisser Feuchtesensoren vorgeschlagen. Im Zusammenhang mit der Einrichtung ist die Abhängigkeit der Kapazität und des ohmschen Widerstands eines gewissen Materials von der Feuchte dargestellt. Die Feuchteabhängigkeit der Kapazität und des ohmschen Widerstands wurden mittels einer LCR-Messbrücke bei Wechselspannung und einer Frequenz von 100 Hz ermittelt. In dieser Veröffentlichung ist auch festgehalten, dass in einem Befeuchtungszyklus von niedriger Feuchte zu hoher Feuchte und wieder zurück zu tiefer Feuchte die Kapazität des Feuchtesensors eine Hysterese einschliesst. Durch Wiederholen des Befeuchtungszyklus konnte auch gezeigt werden, dass bei den untersuchten Feuchtesensoren die Hysterese nach etwa acht Befeuchtungszyklen sehr schmal wird.

Ein Hystereseverhalten in Befeuchtungszyklen bei gewissen kapazitiven Feuchtesensoren wurde auch in Publikationen von Li G. Q. et al ("A humidity-sensing model for metal-insulator-semiconductor capacitors with porous ceramic film", JOURNAL OF APPLIED PHYSICS, 15 JUNE 2000, AIP, USA, Bd. 87, Nr. 12, Seiten 8716-8720, XP002237564, ISSN: 0021-8979) und von Denton D. D. et al ("The long term reliability of a switched-capacitor relative humidity sensor system", CIRCUITS AND SYSTEMS, 1990, PROCEEDINGS OF THE 33RD MIDWEST SYMPOSIUM ON CALGARY, ALTA., CANADA 12-14 AUG. 1990, NEW YORK USA, IEEE, US, 12. August 1990, Seiten 854-857, XP010047973, ISBN: 0-7803-0081-5) beschrieben.

Aus JP02262044A ist bekannt, durch Hystereseverhalten verursachte Fehler zu reduzieren, indem - abhängig von einem vorangegangenen Messintervall - aus einer Vielzahl von verfügbaren Referenzfunktionen von Kalibrierungskurven eine gewisse Referenzfunktion ausgewählt und für einen aktuellen Messwert ein Feuchtewert mit Hilfe der ausgewählten Referenzfunktion berechnet wird.

Der Erfindung liegt die Aufgabe zu Grunde, bekannte Verfahren zur Erfassung der Luftfeuchtigkeit derart zu verbessern, dass mit einem herkömmlichen kapazitiven Feuchte-Messelement nach sprungartigen Veränderungen der relativen Feuchte eine wesentliche Verbesserung der Messgenauigkeit erreichbar ist.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:

Fig. 1 ein Blockschaltbild eines Feuchtefühlers mit einem kapazitiven Feuchte-Messelement zur Erfassung der Luftfeuchtigkeit,

Fig. 2 eine allgemeine Schaltung zur messtechnischen Erfassung des kapazitiven Feuchte-Messelements,

Fig. 3 ein Diagramm mit prinzipiellen Spannungsverläufen am kapazitiven Feuchte-Messelement,

Fig. 4 eine weitere Schaltung zur messtechnischen Erfassung des kapazitiven Feuchte-Messelements,

Fig. 5 einen typischen Verlauf eines Feuchtigkeitssignals in einem eine Befeuchtungsphase und Entfeuchtungsphase aufweisenden Zyklus, und

Fig. 6 einen typischen Verlauf des Feuchtigkeitssignals auf eine sprunghafte Änderung der Feuchtigkeit.

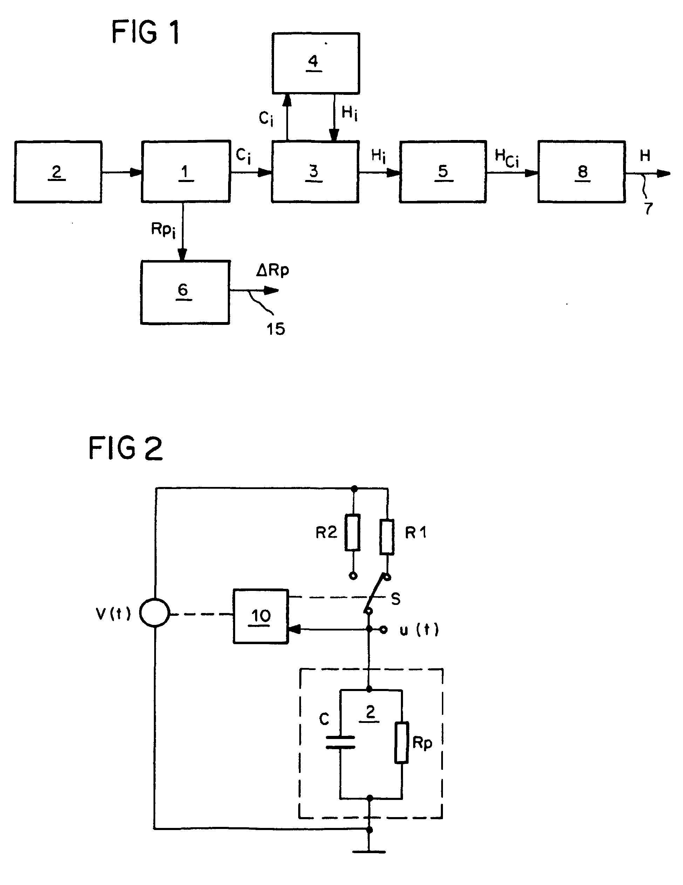

Ein in der Fig. 1 dargestellter Feuchtefühler weist ein mit einer Signalaufbereitungseinheit 1 verbundenes kapazitives Feuchte-Messelement 2 und eine der Signalaufbereitungseinheit 1 nachgeschaltete Auswertungseinheit 3 auf.

In einer vorteilhaften Implementierung weist der Feuchtefühler auch eine Datenstruktur 4 auf, welche für die Auswertungseinheit 3 benutzbar ist. Zur weiteren Verbesserung der Eigenschaften kann der Feuchtefühler durch eine der Auswertungseinheit 3 nachgeschaltete Korrektureinheit 5 und/oder eine mit der Signalaufbereitungseinheit 1 verbundene Überwachungseinheit 6 ergänzt werden. Ein Feuchtigkeitssignal H an einem Ausgang 7 des Feuchtefühlers ist vorteilhafterweise über eine Schnittstelleneinheit 8 anpassbar.

Je nach Bedarf wird das Feuchtigkeitssignal H in der Schnittstelleneinheit für eine am Ausgang 7 vorgesehene Norm aufbereitet, beispielsweise als digitales Signal und/oder als analoges Signal.

Gewisse elektrische Eigenschaften wie eine Kapazität oder ein ohmscher Widerstand des kapazitiven Feuchte-Messelements 2 sind von der Feuchtigkeit der das Feuchte-Messelement 2 umgebenden Raumluft derart veränderbar, dass sie von der Signalaufbereitungseinheit 1 erfassbar sind.

Bei hohen Anforderungen an die Messgenauigkeit kann das Feuchte-Messelement 2 nicht als idealer Kondensator - also als reine Kapazität - modelliert werden. Es hat sich jedoch herausgestellt, dass das Feuchte-Messelement 2 in einen Frequenzbereich zwischen null und etwa 50 kHz in einer guten Näherung durch eine Parallelschaltung einer veränderbaren Kapazität C und eines veränderbaren ohmschen Widerstands Rp modellierbar ist. Die Werte der Kapazität C und des Widerstands Rp sind nicht nur von der Feuchte, sondern auch von der Temperatur abhängig und streuen zu dem in der Regel innerhalb einer Fertigungsserie.

Ein aktueller Kapazitätswert Ci des Feuchte-Messelements 2 wird von der Signalaufbereitungseinheit 1 ermittelt und an die Auswertungseinheit 3 zur Berechnung des am Feuchte-Messelement 2 herrschenden Luftfeuchtigkeitswerts Hi zur Verfügung gestellt. Der Luftfeuchtigkeitswert Hi wird mit Vorteil mit Hilfe der Datenstruktur 4 für den aktuellen Kapazitätswert Ci berechnet. Die Datenstruktur 4 ist beispielsweise eine Tabelle oder eine mathematische Beziehung zwischen der Kapazität C und der Luftfeuchtigkeit, wobei bei Bedarf noch weitere Parameter - beispielsweise die Lufttemperatur - einbezogen werden. Der Feuchtefühler ist in der Regel derart auszulegen, dass das von ihm generierte Feuchtigkeitssignal ein Mass für die relative Luftfeuchtigkeit RH ist. Der relativen Luftfeuchtigkeit wird beispielsweise ein Wertebereich von 0%rh bis 100%rh zugeordnet.

In der Fig. 2 ist das Feuchte-Messelement 2 gestrichelt dargestellt und durch die Parallelschaltung der Kapazität C und des ohmschen Widerstands Rp modelliert. Zur Ermittlung des aktuellen Kapazitätswerts Ci oder eines aktuellen Widerstandswerts Rpi des Modells wird das Feuchte-Messelement 2 erfindungsgemäss durch eine Spannungsquelle V(t) und einen Umschalter S in einem ersten Messablauf über einen ersten Messwiderstand R1 geladen und/oder entladen und auch in einem zweiten Messablauf über einen zweiten Messwiderstand R2 geladen und/oder entladen.

In einer vorteilhaften Implementierung der Signalaufbereitungseinheit 1 werden die Spannungsquelle V(t) und der Umschalter S von einem Steuermodul 10 gesteuert. Das Steuermodul 10 wird beispielhaft mit einem entsprechend programmierten Mikrocomputer oder Mikroprozessor verwirklicht.

Die Werte der beiden Messwiderstände R1 und R2 sind verschieden und mit Vorteil kleiner zu wählen, als der kleinste erwartete Wert des Widerstands Rp. Zur Ermittlung des aktuellen Kapazitätswerts Ci und des aktuellen Widerstandswerts Rpi werden die Verläufe der über dem Feuchte-Messelement 2 liegenden Spannung u(t) für die beiden Messabläufe beispielhaft durch das Steuermodul 10 ausgewertet. Aus einer Auswertung der beiden Messabläufe sind vorteilhafterweise entweder zwei verschiedene Zeitkonstanten T1 und T2 oder zwei verschiedene Periodendauern berechenbar, je nachdem, ob während eines Messablaufs das Feuchte-Messelement 2 nur geladen oder entladen, oder aber in jedem Messablauf geladen und entladen wird.

Mit Hilfe der beiden Zeitkonstanten T1 und T2 oder der beiden Periodendauern lassen sich der aktuelle Kapazitätswert Ci und der aktuelle Widerstandswert Rpi für die vorteilhafte Modellierung des Feuchte-Messelements 2 berechnen.

Im folgenden wird beispielhaft ein periodisches Entladen des Feuchte-Messelements 2 nach der in Fig. 2 gezeigten Prinzipschaltung näher beschrieben. Mit dieser Beschreibung des gewählten Messablaufs ist eine Umsetzung auf einen gleichwertigen Messablauf mit einem periodischen Laden oder auch mit periodischem Laden und Entladen ohne grossen Aufwand nachvollziehbar.

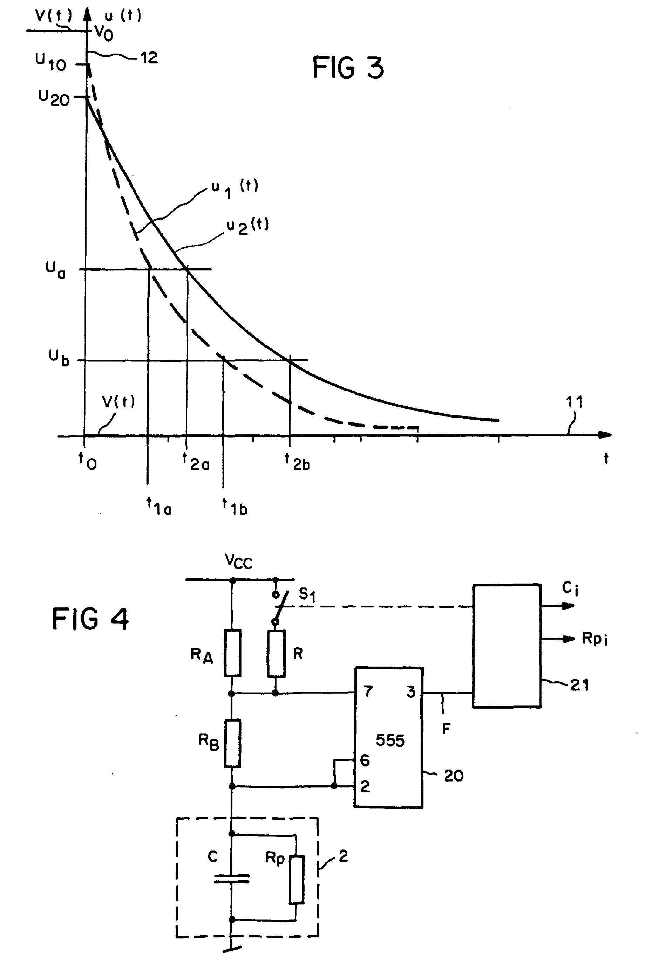

In der Fig. 3 sind für die Schaltung nach Fig. 2 in einem Koordinatensystem auf der Abszisse 11 die laufende Zeit t und auf der Ordinate 12 Spannungspegel eingetragen.

Vor dem ersten Messablauf - in Fig. 3 bei t < t0 - liefert die Spannungsquelle V(t) den Wert V0 und das Feuchte-Messelement 2 ist entsprechend dem Verhältnis des durch den ersten Messwiderstand R1 und den ohmschen Widerstand Rp gebildeten Spannungsteilers auf einen Wert U10 geladen.

Ab einem Zeitpunkt t0 wirkt die Spannungsquelle V(t) als Kursschluss, so dass die Kapazität C des Feuchte-Messelements 2 über die zur Kapazität C parallel geschalteten Widerstände R1 und Rp entladen wird. Die Entladung ergibt einen Spannungsverlauf u1(t) am Feuchte-Messelement 2.

Mit der e-Funktion exp() gilt für die Spannung u1 (t):

$$u1(t) = V0 \cdot (Rp / (R1 + Rp)) \cdot \exp(-t / T1)$$

und für die erste Zeitkonstante T1:

$$T1 = C / (1 / R1 + 1 / Rp) \qquad\qquad [\text{ Gleichung 1 }]$$

Die erste Zeitkonstante T1 wird berechenbar, wenn im ersten Messablauf zwei Punkte des Verlaufs u1(t) gemessen werden. Ein erster Punkt liegt bei einer ersten Spannungsschwelle Ua und ein zweiter Punkt bei einer zweiten Spannungsschwelle Ub.

$$\text{Mit } U10 = V0 \cdot (Rp / (R1 + Rp)) \text{ gilt für die erste Spannungsschwelle Ua:}$$

$$Ua = U10 \cdot \exp(-t1a / T1)$$

und für die zweite Spannungsschwelle Ub:

$$Ub = U10 \cdot \exp(-t1b / T1)$$

Aus den beiden Gleichungen für die Spannungsschwellen Ua und Ub wird:

$$Ua / Ub = \exp(-t1a / T1) / \exp(-t1b / T1)$$

Durch logarithmieren mit der Basis e:

$$\ln(Ua / Ub) = (t1b / T1) - (t1a / T1)$$

Und schliesslich für die erste Zeitkonstante T1:

$$T1 = (t1b - t1a) / \ln(Ua / Ub) \qquad\qquad [\text{ Gleichung 2 }]$$

Auch vor dem zweiten Messablauf - in Fig. 3 bei t < t0 - liefert die Spannungsquelle V(t) den Wert V0 und das Feuchte-Messelement 2 ist entsprechend dem Verhältnis des durch den zweiten Messwiderstand R2 und den ohmschen Widerstand Rp gebildeten Spannungsteilers auf einen Wert U20 geladen.

Ab einem Zeitpunkt t0 wirkt die Spannungsquelle V(t) als Kursschluss, so dass die Kapazität C des Feuchte-Messelements 2 über die zur Kapazität C parallel geschalteten Widerstände R2 und Rp entladen wird. Die Entladung ergibt einen Spannungsverlauf u2(t) am Feuchte-Messelement 2.

Mit der e-Funktion exp() gilt für die Spannung u2(t):

$$u2(t) = V0 \cdot (Rp / (R2 + Rp)) \cdot \exp(-t / T2)$$

und für die zweite Zeitkonstante T2:

$$T2 = C / (1 / R2 + 1 / Rp) \qquad\qquad [\text{ Gleichung 3 }]$$

Ähnlich zur Berechnung der ersten Zeitkonstante T1 wird die zweite Zeitkonstante T2 berechenbar, wenn auch im zweiten Messablauf zwei Punkte des Verlaufs u2(t) gemessen werden. Ein erster Punkt liegt bei einer ersten Spannungsschwelle Ua und ein zweiter Punkt bei einer zweiten Spannungsschwelle Ub.

Mit einer Zeit t2a für den ersten Punkt im Verlauf der Entladung u2(t) und einer Zeit t2b für den zweiten Punkt ergibt sich für die zweite Zeitkonstante T2:

$$T2 = (t2b - t2a) / \ln(Ua / Ub) \qquad\qquad [\text{ Gleichung 4 }]$$

Mit den in den beiden Messabläufen ermittelten Zeitkonstanten T1 und T2 lassen sich die Kapazität C und der ohmsche Widerstand Rp des Feuchte-Messelements 2 wie folgt berechnen:

Werden Gleichung 1 und Gleichung 4 je nach 1/Rp aufgelöst und gleichgesetzt, ergibt sich für die Kapazität C des Feuchte-Messelements 2:

$$C = T1 \cdot T2 \cdot (R2 - R1) / (R1 \cdot R2 \cdot (T2-T1)) \qquad\qquad [\text{ Gleichung 5 }]$$

Werden Gleichung 1 und Gleichung 4 je nach C aufgelöst und gleichgesetzt, ergibt sich für den ohmschen Widerstand Rp des Feuchte-Messelements 2:

$$Rp = R1 \cdot R2 \cdot (T2 - T1) / (T1 \cdot R2 - T2 \cdot R1) \qquad\qquad [\text{ Gleichung 6 }]$$

Die beiden Spannungsschwellen Ua und Ub sind mit Vorteil so zu wählen, dass die beiden in Gleichung 2 beziehungsweise Gleichung 4 benötigten Zeitdifferenzen t1b - t1a und t2b - t2a messtechnisch genügend genau erfassbar sind. Mit Vorteil werden die Schwellen Ua und Ub so gewählt, dass die Zeitpunkte t1a, t1b, t2a und t2b der Messung eher im steilen Bereich der Entladungen u1(t) und u2(t) erfolgen, zeitlich jedoch nicht zu nahe beieinander liegen. Eine gute Genauigkeit ergibt sich, wenn die erste Spannungsschwelle Ua bei 50% der maximalen Spannung der Quelle V(t) und die zweite Spannungsschwelle Ub bei 25% der maximalen Spannung der Quelle V(t) liegt.

Der aktuelle Kapazitätswert Ci und der aktuelle Widerstandswert Rpi des Feuchte-Messelements 2 sind auf vorteilhafte Art auch mit Hilfe eines universellen Timer-Bausteins erfassbar. Fig. 4 zeigt die prinzipielle Beschaltung am Beispiel eines allgemein als Typ 555 bekannten und von mehreren Herstellern angebotenen Timer-Bausteins 20, der unter anderem auch unter der Typen-Bezeichnung LM1455, MC1455 oder MC1555 angeboten wird.

Der Timer-Baustein 20 ist über die Bausteinanschlüsse 2 - "Trigger" -, 6 - "Threshold" -, und 7 - "Discharge" - als astabile Kippstufe geschaltet, wobei die Periodendauer eines Ausgangssignals F an Bausteinanschluss 3 "Output" des Timer-Bausteins 20 vom Feuchte-Messelement 2 und von Widerständen RA, RB und R abhängig ist.

Über einen von einer Steuereinheit 21 betätigbaren Schalter S1 ist der Widerstand R parallel zum Widerstand RA schaltbar.

In einer vorteilhaften Variante der Erfindung wird das Feuchte-Messelement 2 in einem ersten Messablauf bei offenem Schalter S1 über die Widerstände RA und RB geladen und über den Widerstand RB entladen, dabei ist eine erste Periodendauer des Signals F von der Steuereinheit 21 erfassbar.

In einem zweiten Messablauf wird das Feuchte-Messelement 2 bei geschlossenem Schalter S1 über den Widerstand RB und die Parallelschaltung der Widerstände RA und R geladen und über den Widerstand RB entladen, dabei ist eine zweite Periodendauer des Signals F von der Steuereinheit 21 erfassbar.

Durch die beiden Messabläufe wird also auch in diesem Ausführungsbeispiel das Feuchte-Messelement 2 über zwei unterschiedliche Widerstandswerte geladen, so dass von der Steuereinheit 21 zwei verschieden lange Periodendauern erfassbar sind.

Mit Hilfe der beiden Periodendauern werden aktuelle Werte Ci und Rpi für die Kapazität C und den ohmschen Widerstand Rp des Feuchte-Messelements 2 berechnet. Mit Vorteil ist die Steuereinheit 21 durch einen Mikrocomputer implementiert, der auch die aktuellen Werte Ci und Rpi berechnet.

In einer vorteilhaften Ausführungsvariante des Feuchtefühlers, wird eine Veränderung des ohmschen Widerstands Rp von der Überwachungseinheit 6 über einen längeren Zeitraum, also über mehrere Monate oder Jahre erfasst. Eine grössere Abweichung $\Delta Rp$ des Wertes des ohmschen Widerstands Rp, kann auf einen Fehler oder eine fortgeschrittene Alterung des Feuchte-Messelements 2 hindeuten. Für eine Fehlerdiagnose wird an einem weiteren Ausgang 15 des Feuchtefühlers 2 (Fig. 1) beispielhaft ein der Abweichung $\Delta Rp$ entsprechendes Signal ausgegeben.

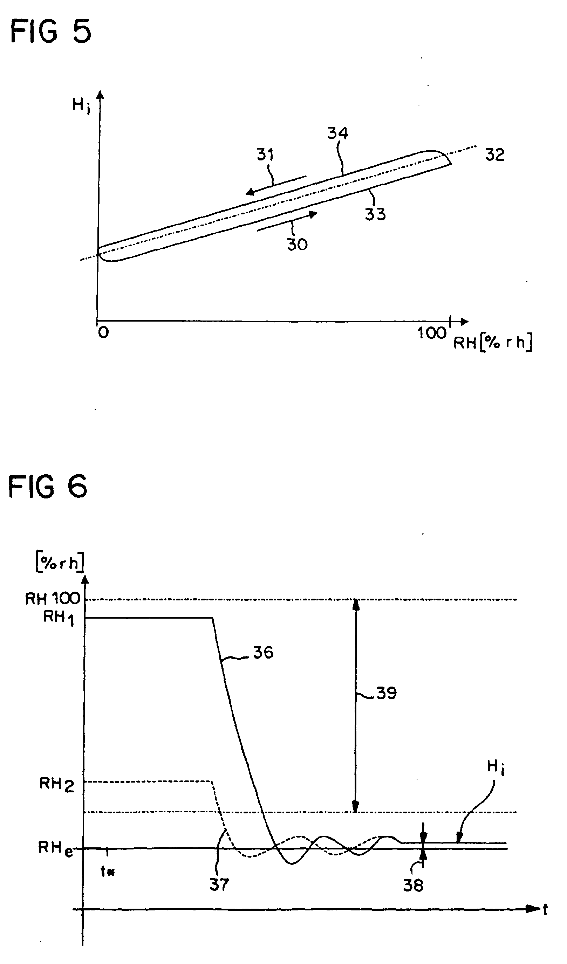

Es konnte gezeigt werden, dass, wenn das Feuchte-Messelement 2 einem aus einer Befeuchtungsphase 30 und einer Entfeuchtungsphase 31 bestehenden Zyklus unterworfen wird, der vom Feuchte-Messelement 2 gemessene Feuchtigkeitswert Hi typischerweise einer in Fig. 5 dargestellten Hysterese 32 folgt. In der Befeuchtungsphase 30 folgt der bei einer gewissen relativen Luftfeuchtigkeit RH gemessene Feuchtigkeitswert Hi einer unteren Flanke 33 der Hysterese 30, während in der Entfeuchtungsphase 31 der bei einer gewissen relativen Luftfeuchtigkeit RH gemessene Feuchtigkeitswert Hi einer oberen Flanke 34 folgt. Die Hysterese 30 wirkt sich also grundsätzlich derart als Fehler aus, dass in der Entfeuchtungsphase 31 ein zu hoher Feuchtigkeitswert Hi und in der Befeuchtungsphase 30 ein zu kleiner Feuchtigkeitswert Hi gemessen wird.

Abhängig vom Typ des untersuchten Feuchte-Messelements 2 liegt ein durch die Hysterese 30 verursachter Fehler im Bereich von 0,5 % bis 3 %.

Es konnte ausserdem gezeigt werden, dass das Feuchte-Messelement 2 nach sprungartigen Veränderungen der relativen Feuchte RH in einer Richtung (Fig. 6), den gleichen Feuchtigkeitswert Hi misst, und zwar unabhängig davon, wie gross die sprungartige Veränderung der relativen Feuchte RH ist. Dieses Verhalten gilt sowohl für sprungartige Entfeuchtung, wie auch für sprungartige Befeuchtung. In Fig. 6 sind beispielhaft eine erste Sprungantwort 36 und eine zweite Sprungantwort 37 dargestellt, wobei die erste Sprungantwort 36 auf einen relativ grossen Sprung von einem ersten Startwert RH1 auf einen Endwert RHe und die zweite Sprungantwort 37 auf einen relativ kleinen Sprung von einem zweiten Startwert RH2 auf den Endwert RHe folgt.

Ein Signal des Feuchte-Messelements 2 pendelt sich also nach eine gewissen Zeit auch auf den gleichen Feuchtigkeitswert Hi ein, wenn die Veränderung der relativen Feuchte RH in der gleichen Richtung sprungartig auf den Endwert RHe ändert. Derartige Sprünge der relativen Feuchte RH können beispielsweise beim Einschalten oder Abschalten einer Regeleinrichtung auftreten. In einer derartigen Regelanwendung ist zu beachten, dass ein durch die Hysterese 30 (Fig. 5) verursachter Fehler 38 erst in eingeschwungenem Zustand korrigierbar ist. Damit in der Regelanwendung festgestellt werden kann, ob der Sollwert sich sprunghaft verändert hat, kann beispielsweise überprüft werden, ob der Feuchtigkeitswert Hi in einem gewissen, die der Vergangenheit liegenden Zeitpunkt t* in einem bestimmten Band 39 lag, wobei das Band auf das Einschwingungsverhalten der Regelanwendung abzustimmen ist.

Zur Erhöhung der erreichbaren Messgenauigkeit wird für ein aus elektrischen Eigenschaften des Feuchte-Messelements 2 ermitteltes aktuelles Feuchtesignal Hi ein korrigiertes Feuchtesignal Hci berechnet, wobei in einer Messphase mit steigender relativer Luftfeuchtigkeit RH das korrigierte Feuchtesignal Hci das um einen Korrekturwert a(RH) erhöhte aktuelle Feuchtesignal Hi ist, und wobei in einer Messphase mit fallender relativer Luftfeuchtigkeit RH das korrigierte Feuchtesignal Hci das um einen Korrekturwert a(RH) verminderte aktuelle Feuchtesignal Hi ist.

Die Messgenauigkeit des Feuchtefühler kann durch eine Korrektureinheit 5 erhöht werden, in welcher für einen für das Feuchte-Messelement 2 ermittelten Feuchtewert Hi ein korrigierter Feuchtewert Hci berechnet wird, wobei in einer Messphase mit steigender relativer Luftfeuchtigkeit RH der korrigierte Feuchtewert Hci der um einen Korrekturwert a(RH) erhöhte aktuelle Feuchtewert Hi ist, und wobei in einer Messphase mit fallender relativer Luftfeuchtigkeit RH der korrigierte Feuchtewert Hci der um einen Korrekturwert a(RH) verminderte aktuelle Feuchtewert Hi ist. Die Korrektureinheit 5 des Feuchtefühlers wird mit Vorteil zwischen die Auswertungseinheit 3 und die Schnittstelleneinheit 8 geschaltet.

Der in der Korrektureinheit 5 berücksichtigte Korrekturwert a(RH) ist grundsätzlich von der relativen Feuchtigkeit RH abhängig und ist beispielhaft als mathematische Formel oder Tabelle in der Korrektureinheit 5 abgespeichert. Bei geringeren Anforderungen oder bei günstiger Form der Hysterese 32 (Fig. 5) kann die erforderliche Messgenauigkeit möglicherweise schon dann erreicht werden, wenn der Korrekturwert a(RH) unabhängig der aktuellen relativen Feuchtigkeit RH als Konstante berücksichtigt wird.

**Patentansprüche**

1.  Verfahren zur Korrektur eines aus elektrischen Eigenschaften eines Feuchteelements (2) ermittelten Feuchtesignals nach einer sprungartigen Veränderung der relativen Feuchte, mit den Verfahrensschritten:

    - Abwarten des Einschwingens des Feuchtesignals,
    - Ermitteln eines Messwerts (Hi) des Feuchtesignals im eingeschwungenen Zustand,
    - Berechnen eines korrigierten Werts (Hci) aus dem im eingeschwungenen Zustand ermittelten Messwert (Hi) derart, dass in einer Messphase mit steigender relativer Luftfeuchtigkeit RH der korrigierte Wert (Hci) der um einen Korrekturwert a(RH) erhöhte Messwert (Hi) ist, und dass in einer Messphase mit fallender relativer Luftfeuchtigkeit RH der korrigierte Wert (Hci) der um einen Korrekturwert a(RH) verminderte Messwert (Hi) ist.

2.  Verfahren nach Anspruch 1, **dadurch gekennzeichnet, dass** der Korrekturwert a(RH) konstant ist.

3.  Verfahren nach Anspruch 1, **dadurch gekennzeichnet, dass** der Korrekturwert a(RH) aus einer gespeicherten Tabelle verwendet oder als mathematische Funktion berechnet wird.

4.  Verfahren nach einem der Ansprüche 1 bis 3, **dadurch gekennzeichnet,**
    **dass** durch Laden und/oder Entladen des kapazitiven Feuchte-Messelements (2) über einen ersten Messwiderstand (R1; RA), eine erste Zeitkonstante (T1) oder eine erste Periodendauer des Lade- und/oder Entladevorgangs ermittelt wird,
    **dass** durch Laden und/oder Entladen des Feuchte-Messelements (2) über einen zweiten Messwiderstand (R2; RA//R), dessen Wert vom Wert des ersten Messwiderstands (R1; RA) verschieden ist, eine zweite Zeitkonstante (T2) oder eine zweite Periodendauer des Lade- und/oder Entladevorgangs ermittelt wird, und
    **dass** aus den beiden Zeitkonstanten (T1, T2) oder den beiden Periodendauern die Kapazität (C) des Feuchte-Messelements (2) berechnet wird, wobei das Feuchte-Messelement (2) für die Berechnung durch die Parallelschaltung eines idealen Kondensators (C) und eines ohmschen Widerstands (Rp) modelliert wird.

5.  Verfahren nach Anspruch 4, **dadurch gekennzeichnet, dass** aus den beiden Zeitkonstanten (T1, T2) oder den beiden Periodendauern der ohmsche Widerstandswert (Rp) des Feuchte-Messelements (2) berechnet wird, wobei das Feuchte-Messelement (2) für die Berechnung durch die Parallelschaltung eines idealen Kondensators (C) und eines ohmschen Widerstands (Rp) modelliert wird.

6.  Verfahren nach Anspruch 4, **dadurch gekennzeichnet, dass** das Feuchtesignal aus der berechneten Kapazität (C) des Feuchte-Messelements (2) ermittelt wird.

**Revendications**

1.  Méthode de correction d'un signal d'humidité déterminé à partir de propriétés électriques d'un élément de mesure d'humidité (2) après une variation brusque de l'humidité relative, comprenant les étapes suivantes :

    - attendre le régime permanent du signal d'humidité,
    - déterminer une valeur mesurée (Hi) du signal d'humidité en régime permanent,
    - calculer une valeur corrigée (Hci) à partir de la valeur mesurée (Hi) déterminée en régime permanent, de manière que dans une phase de mesure où l'humidité relative de l'air RH monte, la valeur corrigée (Hci) soit la valeur mesurée (Hi) augmentée d'une valeur de correction a(RH) et que dans une phase de mesure où l'humidité relative de l'air RH baisse, la valeur corrigée (Hci) soit la valeur mesurée (Hi) diminuée d'une valeur de correction a(RH).

2.  Méthode selon la revendication 1, **caractérisée en ce que** la valeur de correction a(RH) est constante.

3. Méthode selon la revendication 1, **caractérisée en ce qu'**on utilise la valeur de correction a(RH) à partir d'une table mémorisée ou on la calcule comme fonction mathématique.

4. Méthode selon l'une des revendications 1 à 3, **caractérisée en ce qu'**en chargeant et/ou déchargeant l'élément de mesure d'humidité capacitif (2) par l'intermédiaire d'une première résistance de mesure (R1 ; RA) on détermine une première constante de temps (T1) ou une première durée de période de l'opération de charge et/ou décharge, **en ce qu'**en chargeant et/ou déchargeant l'élément de mesure d'humidité (2) par l'intermédiaire d'une deuxième résistance de mesure (R2 ; RA//R), dont la valeur est différente de la valeur de la première résistance de mesure (R1 ; RA), on détermine une deuxième constante de temps (T2) ou une deuxième durée de période de l'opération de charge et/ou décharge, et **en ce qu'**on calcule à partir des deux constantes de temps (T1, T2) ou des deux durées de période la capacité (C) de l'élément de mesure d'humidité (2), l'élément de mesure d'humidité (2) étant modélisé pour le calcul grâce au montage en parallèle d'un condensateur idéal (C) et d'une résistance ohmique (Rp).

5. Méthode selon la revendication 4, **caractérisée en ce qu'**on calcule à partir des deux constantes de temps (T1, T2) ou des deux durées de période la valeur de résistance ohmique (Rp) de l'élément de mesure d'humidité (2), l'élément de mesure d'humidité (2) étant modélisé pour le calcul grâce au montage en parallèle d'un condensateur idéal (C) et d'une résistance ohmique (Rp).

6. Méthode selon la revendication 4, **caractérisée en ce que** le signal d'humidité est déterminé à partir de la capacité calculée (C) de l'élément de mesure d'humidité (2).

## Claims

1. Method for correction of a humidity signal, which is determined from electrical characteristics of a humidity element (2), after a sudden change in the relative humidity, having the following method steps:

   - wait for stabilization of the humidity signal,
   - determine the measured value (Hi) of the humidity signal in the steady state,
   - calculate a corrected value (Hci) from the measured value (Hi) determined in the steady state, in such a way that the corrected value (Hci) is the measured value (Hi) increased by the correction value a(RH) in a measurement phase with rising relative air humidity RH, and in such a manner that the corrected value (Hci) is the measured value (Hi) reduced by a correction value a(RH) in a measurement phase with falling relative air humidity RH.

2. Method according to Claim 1, **characterized in that** the correction value a(RH) is constant.

3. Method according to Claim 1, **characterized in that** the correction value a(RH) from a stored table is used, or the correction value a(RH) is calculated as a mathematical function.

4. Method according to one of Claims 1 to 3, **characterized in that** a first time constant (T1) or a first period duration of the charging and/or discharging process is determined by charging and/or discharging the capacitive humidity measurement element (2) via a first measurement resistor (R1; RA), **in that** a second time constant (T2) or a second period duration of the charging and/or discharging process is determined by charging and/or discharging the humidity measurement element (2) via a second measurement resistor (R2; RA//R), whose value differs from the value of the first measurement resistor (R1; RA), and **in that** the capacitance (C) of the humidity measurement element (2) is calculated from the two time constants (T1, T2) or from the two period durations, with the humidity measurement element (2) being modelled for the calculation by the parallel connection of an ideal capacitor (C) and a non-reactive resistance (Rp).

5. Method according to Claim 4, **characterized in that** the non-reactive resistance (Rp) of the humidity measurement element (2) is calculated from the two time constants (T1, T2) or from the two period durations, with the humidity measurement element (2) being modelled for the calculation by the parallel connection of an ideal capacitor (C) and a non-reactive resistance (Rp).

6. Method according to Claim 4, **characterized in that** the humidity signal is determined from the calculated capacitance (C) of the humidity measurement element (2).

## FIG 1

## FIG 2

FIG 3

FIG 4

## FIG 5

## FIG 6